Europäisches Patentamt

European Patent Office

Office européen des brevets

(19)

(11) **EP 1 591 470 A1**

(12) **EUROPEAN PATENT APPLICATION**

(43) Date of publication:
**02.11.2005 Bulletin 2005/44**

(51) Int Cl.7: **C08J 3/28**, A61C 19/00

(21) Application number: **04076230.4**

(22) Date of filing: **26.04.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(71) Applicant: **DSM IP Assets B.V.
6411 TE Heerlen (NL)**

(72) Inventors:
• **Jansen, Johan Franz Gradus Antonius
6165 AP Geleen (NL)**

• **Houben, Erwin Johannes Elisabeth
6211 EB Maastricht (NL)**
• **Van De Laarschot, Robert Simon Adriaan
7702 AB Dedemsvaart (NL)**
• **Wienke, Dietrich
6181 KV Elsloo (NL)**

(74) Representative: **Jacobs, Monique S.N.
DSM Intellectual Property,
P.O Box 9
6160 MA Geleen (NL)**

(54) **Method for photocuring of resin compositions**

(57)     The invention relates to methods for Light Emitting Diode (LED) curing of a curable resin composition containing a photoinitiating system, wherein the highest wavelength ($\lambda_{max\ PIS}$) of a maximum in absorption of the photoinitiating system is at least 20 nm below, and at most 100 nm below, the wavelength of the maximum in emission of the LED ($\lambda_{LED}$). The invention also relates to use of LED curing in structural applications, in particular in applications for lining or re-lining of objects and to objects containing a cured resin composition obtained by LED curing.

**EP 1 591 470 A1**

**Description**

The present invention relates to methods for LED curing (i.e. curing by means of a Light Emitting Diode) of a curable resin composition containing a photoinitiating system. The photoinitiating system hereinafter also will be referred to as PIS. Curable resin compositions, as meant herein, comprise curable resin components and, optionally, reactive diluents present therewith (the summed weight of resin components and reactive diluent being used as basis for calculating weight percentages for all other components), as well as all kinds of other components, including the PIS, PIS, and any other components and additives as are usually being used in curable resin compositions. The present invention also relates to use of LED curing in structural applications, in particular in applications for lining or re-lining of objects and to objects containing a cured resin composition obtained by LED curing.

In a further specific embodiment, the invention relates to a curable resin composition for use in (re)-lining containing a curable resin dissolved in a copolymerisable free monomer to which an initiator and optionally other additives have been added. The invention therefore also relates to the use of such a curable resin composition in flexible, sleeve-shaped objects for use in (re)-lining. The invention further relates to a process for (re)-lining a tube, tank or vessel with such a flexible, sleeve-shaped object.

In the framework of the present invention (re-)lining is understood to be the provision on the inside of a hollow object or system, such as a pipe system (for example a sewage system, industrial line system or a transport line), a vessel or a tank and the like, of a suitable coating with a thickness of at least 2 mm, but usually more than 6 mm and even up to 30 - 40 mm. The coating layer generally has the object of contributing to the mechanical strength and ensuring the resistance of the hollow object or system to chemicals, corrosion, etc., as well as prevention of leaks. It should be noted that when a hollow object or system is for the first time coated on the inside with a lining (also known as internal coating), this is referred to as lining. Each subsequent time a hollow object or system that is already internally lined is coated with an internal coating, this is called relining. The term (re)-lining therefore refers to all situations where the lining is provided either for the first time or for any subsequent time.

LED curing of curable resin compositions (for use in coating applications) is known from papers presented at the 2003 Radtech Europe Exhibition & Conference for Radiation Curing (November 3-5, 2003, Berlin, Germany). For instance, see K. Dake *et al.* (Conference proceedings, pages 135-140), "LED Curing versus Conventional UV Curing Systems: Property Comparisons of Acrylates and Epoxies"; and S. B. Siegel, (Conference proceedings, pages 149-157), "The UV LED Curing - Advances in a New Technology".

These references, from authors well-informed in the field of curing of resin materials, teach the LED curing of UV-curable resin compositions, in particular for use in coating systems, adhesives and inks. According to these references the highest wavelength of a maximum in absorption of the photoinitiating system (this wavelength, in nm, hereinafter will be referred to as $\lambda_{\text{max PIS}}$) is matched with the wavelength, in nm, of the maximum in emission of the LED (that hereinafter will be referred to as $\lambda_{\text{LED}}$), or-in case such match of wavelengths is insufficient - measures are being taken (namely by the use of suitable sensitizers) to ensure good matching of the said wavelengths. Accordingly, these references teach that curing results will be poor in case of improper matching of the said wavelengths. None of these references provides any teaching or suggestion about curing of layers having a thickness that is substantially larger than the (generally at most about 150 μm) thickness of a coating, adhesive or ink layer. Accordingly, these references do not teach or suggest curing of objects having a thickness of, for instance, more than about 0.5 mm, such as would be suitable for applications in construction materials, for instance for (re)-lining of objects like pipes, especially large diameter pipes. It is further to be noticed, that Siegel *et al.* specifically teaches that LED arrays having a wavelength of the maximum emission of the LED ($\lambda_{\text{LED}}$) at 415 nm or higher cannot be used for the initiation of curing of curable resin compositions.

As LEDs are having a higher maximum wavelength of emission, they are being considered to be more safe (in respect of lower risk of causing eye damages due to the absence of radiation in the UV range. However, according to the above cited references such safer LEDS are unknown for initiating curing of curable resin compositions for structural applications.

Nevertheless, there has remained a long-felt need in the field of (photo)-curing of curable resin compositions to find safe and reliable methods for providing cured structural parts, i.e. of parts and resin objects having a thickness of at least 0.5 mm, and having appropriate mechanical properties such as hardness and chemical resistance. Safety considerations also play a major role when curing a curable resin dissolved in a (co)polymerisable free monomer, i.e. in a reactive diluent. Reactive diluents generally are relatively volatile compounds that may be dangerous because of explosion risks at incidental high temperatures, and because of toxicity aspects during preparation of the cured materials.

The aforementioned problems, according to the present invention, have been overcome by providing a method for LED curing (i.e. curing by means of a Light Emitting Diode) of a curable resin composition containing a photoinitiating system wherein the highest wavelength ($\lambda_{\text{max PIS}}$) of a maximum in absorption of the photoinitiating system is at least 20 nm below, and at most 100 nm below, the wavelength of the maximum in emission of the LED ($\lambda_{\text{LED}}$). Wavelengths

are expressed in nm.

Hereinafter, any difference between $\lambda_{LED}$ and $\lambda_{max\ PIS}$ of 20nm or more, will also be referred to as mismatch. In a formula, the mismatch (MM) can be represented as

$$MM = \lambda_{LED} - \lambda_{max\ PIS} \qquad \text{(in nm)} \ ; \ MM \geq 20 \text{ nm.}$$

The Light Emitting Diodes (LEDs) as can be used, thus should have a mismatch between their wavelength of maximum in emission ($\lambda_{LED}$) and the highest wavelength of a maximum in absorption of the photoinitiating system ($\lambda_{max\ PIS}$). It is to be noticed, that the absorption spectrum of a PIS generally will exhibit various maxima of absorption intensity, at different wavelengths, but that only the one at the highest wavelength is to be taken into account for determining the required mismatch according to the present invention.

Methods and equipment for determining the wavelengths of the maximum in emission of an LED and of the highest maximum in absorption of the photoinitiating system are well known to the skilled man. It should be noticed, however, that the highest maximum in absorption of the PIS not necessarily will be observed in the form of a clear single absorption peak, but also may be present in the absorption spectrum of the PIS in the form of a so-called shoulder at the right (i.e. highest wavelength) side of a peak.

In the context of the present invention, the term LED is used for indicating either single LEDs (i.e. one Light Emitting Diode, having a specific wavelength of maximum in emission, $\lambda_{LED}$) or arrays of LEDs (consisting of a number single LEDs, that may be identical, each with the same $\lambda_{LED}$, or may be different, that is having different $\lambda_{LED}$'s in a range of wavelengths). In the latter case, the wavelength of maximum in emission ($\lambda_{LED}$) for the LED-array with different LEDs is the highest wavelength maximum in nm for the lowest wavelength LED from such array of LEDs.

As meant herein, the term mismatch is still applicable in LED-arrays even if, for a part of the (total number of) individual light emitting diodes matching with the PIS highest wavelength of absorption maximum exists. For the purposes of the present invention, accordingly, in an LED-array consisting of a number of individual LEDs mismatch between $\lambda_{LED}$ and $\lambda_{max\ PIS}$ is assumed to exist in case at least 10% of the individual LEDs have a mismatch with the $\lambda_{max\ PIS}$. The effect of the mismatch for an LED-array is larger in case the percentage of the number of mismatching individual LEDs is higher. That is to say, the effect of mismatch is becoming larger in the series 10%, 20%, 30%, 40% and so on, until 100% mismatching LEDs from the total number of individual LEDs. For LED-arrays best results are being achieved in case 100% of the total number of individual LEDs is mismatching with the PIS.

Surprisingly, the present inventors have found, that excellent curing results of curable objects having a thickness of more than 0.5 mm, for instance of 1 or 2 cm, and even up to about 20 cm or more, can be achieved - throughout the whole thickness of the cured object - that so far were unable to be achieved by photocuring within several minutes, e.g. within 5 to 10 minutes. These excellent results are being achieved due to the mismatch between the $\lambda_{LED}$ and the $\lambda_{max\ PIS}$.

The curable resin compositions as can be used in the methods according to the invention can be selected from a very wide range of resin compositions, as will be explained hereinafter in more detail. At this moment it may suffice to mention that the methods of the invention, in general terms, can be applied for curing of resin compositions that are cationically curable, as well as for resin compositions that are radically curable. Of course, in each such case, a proper selection of photoinitiating system (optionally including a sensitizer) and of LED used is to be made according to the guidelines presented hereinafter.

Cationically curable resin compositions generally comprise curable resin components selected from the group consisting of resin components containing hydroxyl groups, epoxy groups or oxetane groups, or combinations thereof, and of vinylester resin components, and of vinylether resin components, or mixtures of any of the foregoing. Suitable examples of cationically curable resin compositions, for instance, are being described in Netherlands patent NL-1007205.

Radically curable resin compositions generally comprise resin components selected from the groups consisting of (i) homopolymerisable resin components containing one or more electron-poor reactive unsaturations; (ii) co-polymerisable resin components containing one or more electron-poor reactive unsaturations; and (iii) combinations of resin components consisting at least of a component containing at least two reactive unsaturations per molecule and a component containing at least two XH-groups per molecule, with XH representing a labile X-H bond and X not being O or C. Suitable examples of radically curable resin compositions from groups (i) and (ii), for instance, are being described in WO-00/07746. Suitable examples of radically curable resin compositions from group (iii), for instance, are being described in WO-88/020902, EP-A-0156493 or N. B. Cramer *et al.* in Macromol. 36, p. 7964-7969 (2003).

The photoinitiating systems that can be used in the context of the present invention can be chosen from the large group of PIS known to the skilled man. A vast amount of suitable photoinitiating systems, for instance, can be found in Volume 3 of "Chemistry and Technology of UV and EB Formulations", 2nd Edition, by K. Dietliker and J. V. Crivello (SITA Technology, London; 1998).

As meant herein, a photoinitiating system is any system that is able to initiate curing upon irradiation. The PIS may consist of a photoinitiator as such, or may be a combination of a photoinitiator and a sensitizer, or may be a mixture of photoinitiators, optionally in combination with one or more sensitizers.

As mentioned before, in priciple, two main kinds of photocuring are to be distinguished: cationic curing and radical curing. For cationic curing the curable resin composition contains a cationic photoinitiator and optionally a sensitizer. A sensitizer can be any compound which is able to absorb light at a certain wavelength (higher than that of the photoinitiator) and to transfer the said absorbed energy to the photoinitiator which normally absorbs at a lower wavelength (than the sensitizer); initiation of the curing is then done by the photoinitiator itself.

Suitable cationic photoinitiators can be chosen from a long list of known compounds, consisting of, for example, diaryl iodonium salts like diphenyl iodonium tetrafluoroborate, di-p-alkyloxyphenyl iodonium tetrakis pentafluorophenyl borate, and triarylsulphonium salts like triaryl sulphonium hexafluoroarsenate.

Suitable sensitizers for cationic photoinitiating systems are, for example, phenothiazine, xanthones, thioxanthones, perylene and derivatives thereof.

For radical curing also a large number of suitable photoinitiating systems can be used. Generally such radical curing PIS are divided into two classes:

> (i) Norrish Type I systems (i.e. causing $\alpha$-cleavage), optionally also comprising a sensitizer; and
> (ii) Norrish Type II systems (operating by means of electron transfer).

Suitable Norrish Type I photoinitiators can, for instance, be chosen from the group consisting of benzoin derivatives; benzil ketals like 2,2-dimethoxy-2-phenylacetophenone, and dimethoxy acetophenone; $\alpha$-hydroxy alkylphenones like 1-hydroxy-cyclohexylphenyl ketone, and 2-hydroxy-2-methyl-1-phenyl propanone; $\alpha$-aminoalkyl phenones like 2-methyl-1-[4-(methylthio)phenyl]-2-morpholino-propan-2-one, and 2-benzyl-2-dimethylamino-1-(4-morpholinophenyl)butan-1-one; phosphorous containing compounds like monoacyl phosphine oxides, for instance, 2,4,6-trimethylbenzoyl diphenyl phosphine oxide, and diacyl phosphine oxides, for instance, di-(2,4,6-trimethylbenzoyl) phenyl phosphine oxide. and di-(2,6-dimethoxy benzoyl)-2,4,4- trimethylpentyl phosphine oxide. Suitable sensitizers are for instance xanthones, thioxantones benzophenones and derivatives thereof. Mixtures of these photoinitiators and/or sensitizers can also be used.

Suitable Norrish Type II systems are generally based on combinations of an aromatic ketone and a reducing compound. As aromatic ketones xanthones, thioxantones, benzophenones and derivatives thereof can be used. As reducing compounds alcohols, ethers and amines can suitably be employed. Suitable amines are, for instance, aromatic amines like ethyl 4-dimethylamino benzoate, dimethylaniline and aliphatic amines like N,N-dimethyl ethanol amine, N-methyl diethanol amine, triethanol amine. Generally, Norrish Type II systems do not require the further use of (an additional) sensitizer.

It is to be noticed, that cationic initiating systems generally also generate radicals, and that such radicals generated by cationic initiating systems also can be employed in radical curing.

Furthermore, all kinds of combinations of photoinitiators as well as photoinitiating systems can be used in the context of the present invention. For example, combining a cationic photoinitiating system with a Norrish Type II system can easily result in an very efficient photoinitiating system. As an example, the combination of diphenyl iodonium pentafluoroborate with ethyl 4-dimethylamino benzoate and isopropyl thioxanthone is very good photoinitiating system, that can equally be used for radical and for cationic curing according to the present invention.

It is particularly preferred, that the photoinitiating systems used in the context of the present invention are so-called photobleaching initiating systems. In such photobleaching systems, irradiation of the PIS leads to the formation of compounds, derived from radicals formed from the PIS, which have a maximum in absorption at a lower wavelength than the original PIS, but are not active as photoinitiators themselves.

Preferably, in the methods according to the invention, the $\lambda_{LED}$ is at least 420 nm. Even more preferably, because of the lower risks involved as to eye damages etc., the $\lambda_{LED}$ is at least 440 nm.

In the methods for LED curing according to the present invention, it is particularly preferred that the wavelength difference between $\lambda_{LED}$ and $\lambda_{max\ PIS}$ (in nm) is at least 30 nm and at most 90 nm. More preferably, the wavelength difference between $\lambda_{LED}$ and $\lambda_{max\ PIS}$ (in nm) is at least 40 nm and at most 80 nm. Most preferably, the wavelength difference between $\lambda_{LED}$ and $\lambda_{max\ PIS}$ (in nm) is at least 50 nm and at most 70 nm.

Excellent results in curing according to the invention are being achieved when $\lambda_{max\ PIS}$ is falling in the range of between 350 and 420 nm. For $\lambda_{max\ PIS}$ above 420 nm, the resin compositions are too prone for being subject to undesirable effects (e.g. premature curing under the influence of daylight; discoloration) when being exposed to visible light before being cured. Accordingly PIS having $\lambda_{max\ PIS}$ above 420 nm are not suitable for any kinds of structural applications, including applications in (re)-lining. For $\lambda_{max\ PIS}$ below 350 nm the hazards inherent to UV irradiation become more pronounced, and absorption by other components present in the resin, for instance fillers, is generally too high, so curing is much less efficient.

The photoinitiating system used in the methods of the present invention preferably contains a Norrish Type I photoinitiating system. Examples of Norrish Type I PIS are being presented in the foregoing text. Most preferably, The photoinitiating system used in the methods of the present invention is a Norrish Type I photoinitiating system. From the group of Norrish Type I PIS, phosphorous-containing photoinitiating systems are most preferred. However, also Norrish Type II PIS suitably may be used. Phosphorous-containing photoinitiating Norrish Type I systems are most preferred.

The amount of PIS in the curable resin compositions as is to be used in the methods of the present invention may vary within a wide range, but is generally in the range of from 0.001 to 5 wt.%, preferably of from 0.05 to 3 wt.%, most preferably of from 0.1 to 1 wt.%. These weight percentages are calculated in respect of the total weight of the curable resin composition, however excluding fillers, etc. (or, in other words, the summed weight of resin components and reactive diluent is being used as basis for calculating weight percentages for all other components).

In the methods for LED curing according to the invention, the resin component of the curable resin composition is preferably selected from the groups consisting of

(a) cationically curable resin components, in particular resin components selected from the group consisting of resin components containing hydroxyl groups, epoxy groups or oxetane groups, or combinations thereof, and of vinylester resin components, and of vinylether resin components, or mixtures of any of the foregoing;

(b) radically curable resin components, in particular resin components selected from the groups consisting of

(i) homopolymerisable resin components containing one or more electron-poor reactive unsaturations; and
(ii) co-polymerisable resin components containing one or more electron-poor reactive unsaturations; and
(iii) combinations of resin components consisting at least of a component containing at least two reactive unsaturations per molecule and a component containing at least two XH-groups per molecule, with XH representing a labile X-H bond and X not being O or C.

The resin component of the curable resin compositions as are being used in the methods of the present invention may have an average molecular weight within a wide range of molecular weights, but preferably has an average molecular weight in the range of from 500 to 10000 D (Dalton), more preferably of from 1000 to 5000 D, and most preferably of from 2500 to 4000 D.

It is particularly preferred that the resin component of the curable resin composition used, is containing one or more electron-poor reactive unsaturations. Reactive unsaturations hereinafter also are being abbreviated as R.U. s. As meant in the present patent application, the term resin component accordingly represents any polymer having reactive unsaturations and also may include any reactive diluent present in the composition. The R.U.s present in the resin compositions used in the methods of the present invention are most preferably electron-poor R.U.s attached to the said polymer. Most preferably, these polymers containing R.U.s are polyesters (i.e. polymers containing multiple ester groups). Examples of such (unsaturated) polyester polymers are fumarate or maleate polyester resins. Usually such fumarate and maleate polyester resins also comprise a reactive diluent, such as, for instance, styrene or butanediol dimethacrylate (BDDMA). Other suitable reactive diluents may be chosen from the group consisting of vinyl toluene, α-methyl styrene, tert-butyl styrene, methyl methacrylate (MMA), hydroxyethyl methacrylate (HEMA), hydroxypropyl methacrylate (HPMA), vinyl ethers, vinyl esters, triethylene glycol dimethacrylate (TEGDMA), trimethylolpropane trimethacryate (TMPTMA), and phenoxyethyl methacrylate (PEMA).

The term (unsaturated) polyesters as used herein, however, also includes (meth)acrylates; usually such (meth)acrylate-functional resins also comprise a reactive diluent, which very suitably is BDDMA.

Suitable maleate, respectively fumarate, polyester resins that can be used in the resin composition according to the invention are polyesters obtained by reaction of organic compounds that contain carboxyl and/or alcohol groups. At least one of the starting compounds contains unsaturated compounds. Examples are maleate resins, isophthalic acidic resins, isophthalic acid / neopentyl glycol resins, orthophthalic acidic resins, orthophthalic acidic / neopentyl glycol resins, terephthalic acidic resins, dicyclopentadiene resins (DCPD). Examples of commercially available resins belonging to this category of resins are, for instance, the SYNOLITE™ resins and PALATAL™ resins of DSM Composite Resins (Schaffhausen, Switzerland).

Suitable (meth)acrylate resins, also known under the name epoxy (meth)acrylates, that can be used in the resin composition according to the invention are addition products of polyepoxides and unsaturated carboxylic acids, preferably acrylic acid and methacrylic acid. Suitable polyepoxides are epoxy novolak resins and in particular polyepoxides based on bisphenol A. A class of vinyl ester resins that is also suitable is formed by the esterification products of alkoxylated bisphenol A with (meth)acrylic acid. Examples of commercially available resins belonging to this category of resins are, for instance, the ATLAC™ resins of DSM Composite Resins (Schaffhausen, Switzerland). The preparation method of unsaturated polyester resins and (meth)acrylate-functional resins are known to the person skilled in the art, for example from the "Kunststoff-Handbuch band VIII: Polyester" (Vieweg und Goerden, ISBN 3-446-10108-2, 1973), part II, chapters 1 up to and including 3.

Suitable (meth)acrylate urethane resins can be obtained by reacting a polyfunctional isocyanate with a polyhydric alcohol and/or a polyvalent amine and with a hydroxyalkyl (meth)acrylate. Examples are known from US-A-3297745, US-A-3772404, US-A-4618658, GB-A-2217722, DE-A-3744390 and EP-A-534197. (Meth)acrylated acrylics, i.e. poly(meth)acrylates with one or more (meth)acrylate groups bound thereto as side chain(s), also suitably can be used.

The skilled man, in dependence of the field of application where the LED-cured resin compositions are to be used, easily can determine - based on his general knowledge about resin properties - which type of resin is most fit for the said application.

The resin compositions as are being used in the method for LED curing according to the invention may also contain fillers and other additives as are suitable in resin compositions (such as, for instance, low profile additives, release agents, etc.) for ensuring good handling and proper mechanical properties. Suitably, the resin composition comprises one or more fillers, which fillers preferably are being selected from the groups consisting of transparent fillers and translucent fillers. Transparent fillers, as well as translucent fillers, have at most a very low absorption of light falling onto the surface of the resin composition; accordingly, their transmission values are high.

Suitable fillers for the resin composition as can be used in the methods according to the invention are for example aluminium trihydrate, calcium carbonate, mica, microcrystalline silica, quartz powder, barite and/or talc.

For improving the handling properties of the resin compositions as are being used in the methods according to the invention, it is further preferred that the resin composition comprises at least one agent having thixotropic properties. Presence of such thixotropic agent may be independent of presence or absence of fillers in the resin composition. Particularly for applications in (re)-lining the use of thixotropic agents is preferred.

Additionally, in preferred embodiments of the invention, the resin composition used further comprises at least one reinforcement material. In (re)-lining applications the reinforcement material may either be present in the resin composition itself, but it also may be applied, in the context of the present invention, in the form of a supporting material. Often, in case of (re)-lining applications, the resin composition is being applied in the form of flexible, sleeve-shaped objects.

The supporting or reinforcing material of such flexible, sleeve-shaped objects for (re)-lining is, for example, a fibrous web or needle felt of glass fibres, silica fibres, quartz fibres, carbon fibres, boron fibres, metal fibres, asbestos fibres, polyamide fibres (for example Kevlar® of Du Pont), polyester fibres, cotton fibres, silk fibres, polyethylene fibres and jute fibres. The person skilled in the art can readily determine the suitable fibres for a specific application or desired property of the structural element to be formed. Carbon fibres are used for example for applications in which a low weight and high rigidity are desirable.

It is very advantageous in the methods for LED curing according to the invention, that the resin composition further comprises at least one inhibitor, preferably at least one phenolic inhibitor.

Most preferably, the phenolic inhibitor is 2,6-di-tert-butyl-4-methyl phenol. For stability of the resin compositions to be cured according to the invention, it is preferred, that the compositions are substantially free of compounds capable of initiating the curing without being irradiated by the LED light. For instance, compounds like peroxides, preferably should be absent from the resin compositions.

The present invention also relates to use of LED curing in structural applications, in particular in applications for lining or re-lining of objects and to objects containing a cured resin composition obtained by LED curing. Preferably, the curable resin composition, when being cured, has a thickness in the range of from 0.5 mm to 20 cm, more preferably of from 1 mm to 5 cm.

Until now curing in (re)-lining applications usually is being done by thermal curing (using either hot water or steam, and thus requiring difficult equipment and expensive treatments while still having various disadvantages, for instance as to occurrence of volatile organics during the curing process at the high temperatures reached) or by curing with UV-light. Also in the latter case, the UV-lamps used generate quite a large amount of heat, and thus also problems of evolution of volatile organics cannot be avoided. In all of such prior art methods, moreover, due to the low curing speed only small cure depths can be reached within an acceptable time of several (e.g. about 5 to 10) minutes, and thus only relatively thin layers of (re)-lining material can be applied to the inside wall of the pipes and tanks to be (re)-lined. Especially when the diameter of the pipes to be (re)-lined becomes larger, the need for providing the inside walls with thicker layer of laminates becomes more urgent. At a diameter of 15 cm, generally already a laminate layer of about 6 mm needs to be applied. UV-curing at such diameter already becomes quite tedious, and almost impossible due to generation of heat by the lamps used. However, (re)-lining applications are also becoming more and more important for larger diameter pipes, for instance for (re)-lining of sewers, etc. Such pipes easily can have diameters of up to 200 cm, and thickness of the (re)-lining laminate layers then already should be at least about 20 mm. For even larger diameter pipes still thicker laminates are to be applied, and curing thereof also needs to be complete for achieving good properties of the (re)-lining layer itself.

The present invention, therefore, foresees in a simple, environmentally safe and well-controllable method for (re)-lining of pipes, tanks and vessels, especially for such pipes and equipment having a large diameter, in particular of more than 15 cm, without the aforementioned problems and without requiring big investments in equipment for the (re)-lining operation.

Various (re)-lining techniques are known to the skilled man. Generally use is made of flexible, sleeve-shaped objects, impregnated with a curable resin composition, of such dimensions, that the hollow object or system that is to be lined internally can be adequately lined therewith. This method is also known as "Schlauchrelining" in German. The flexible, sleeve-shaped objects used in (re)-lining usually consist of at least one waterproof layer that is impermeable to the uncured resin (barrier layer) and of a supporting or reinforcing material that is impregnated with a curable resin composition. The layer that is impermeable to the uncured resin is usually to a certain extent permeable to the solvent in which the resin composition is incorporated. The supporting material generally determines the thickness of the (re)-lining. The supporting material can also ensure mechanical strength and as such - optionally in combination with any fillers present - also function as a reinforcing material. The protective layer (barrier layer) is optionally removed after curing.

In the process of the present invention the (re)-lining of tubes, tanks or vessels with the flexible, sleeve-shaped objects is preferably being done as follows:

(a) the flexible, sleeve-shaped object is introduced into a tube, tank or vessel, and then
(b) is pressurized therein with a liquid or a gas, so that the flexible, sleeve-shaped object is forced against the inside of the wall of the tube, the tank or the vessel, and
(c) the curable resin composition present in the flexible, sleeve-shaped object is cured by LED curing.

In the method for LED curing according to the present invention, the distance between the LED and the top-layer of the resin composition being cured is preferably in the range of from 2 mm to 30 cm, and more preferably of from 2 mm to 10 cm. Of course, when larger objects are being cured, or when, for instance, pipes having a diameter of more than 1 m are to be (re)-lined, the distance between the LED and the top-layer of the resin composition being cured may be more than 30 cm. In such case, however, the energy input needed for the curing is to be increase.

The LED curing according to the invention very advantageously is being performed, with the curable resin composition, when being cured, being covered at least at its layer facing the LED by a barrier layer sheet impermeable to the resin composition itself, and preferably consisting of a translucent material which is waterproof and permeable for volatile materials.

In (re)-lining applications, the barrier layer that is impermeable to the curable resin composition and that is provided at at least one of the surfaces of the sleeve-shaped object preferably is a layer of polyethylene, polypropylene, polyamide etc. (or optionally may be a glass sheet or a polyurethane sheet) and more preferably is permeable for water vapor, etc. As mentioned above, the protective layer (barrier layer) is optionally removed after curing.

In one of the preferred embodiments of the present invention, the LED curing of the resin composition is done while controlling the intensity of LED irradiation and/or of the wavelength of the maximum in emission of the LED ($\lambda_{LED}$) during the curing, preferably in combination with temperature control of the resin being cured, most preferably such temperature control being performed by non-contact temperature measurement. Controlling of the intensity of LED irradiation, for instance, can be done by alternatingly switching on/off of the LED, whereby the times "on" and "off" may be varied independently, and even per cycle. Controlling of the intensity of LED irradiation also can be done by varying the intensity of incident light over time, or by selectively switching on/off of specific parts of an LED-array, for instance specific areas thereof, or individual LEDs therein having a specific maximum wavelength in emission ($\lambda_{LED}$).

The methods for LED curing according to the present invention in particular are being used in applications for lining or re-lining of objects. The present invention finally also relates to objects containing a cured resin composition obtained by LED curing as claimed herein.

The invention is now being further illustrated by means of a series of Examples and Comparative Examples, which, however, by no means are intended to limit the scope of the invention exactly to the embodiments shown in the Examples.

All experiments and comparative experiments in LED curing were performed, using one of the following types of LEDs, as further indicated in the tables:

(A) LED 395nm (used in Comparative Examples) :

Control Cure UV-LED (UV-Process Supply Inc, Chicago, USA), arranged as an LED array with an output of 6.3 mW/cm$^2$ (output determined at a distance of 1 cm from the LED, by means of a Solatel Solascope 1 apparatus);

(B) LED 450nm (used in Examples) :

SANYO Blue Diode (Laser Components GmbH, Olching, Germany), constructed in the form of an LED array with an output of 7 mW/cm$^2$ (output determined at a distance of 1 cm from the LED, by means of a Solatel Solascope 1 apparatus for determining the intensity up to a wavelength of 420 nm, in combination with extrapolation of the intensity for the wavelength range above 420 nm by means of Raman spectroscopy).

All experiments and comparative experiments in LED curing were performed using a standard curable resin composition (hereinafter referred to as CRC1), which was prepared as follows:

To 500 g of Synolite 1035-X-3 (an ortho-NPG resin of DSM Composite Resins, Switzerland) was added 1.5 g of Irgacure® 819 (a photoinitiator of Ciba, Switzerland). This PIS has a highest wavelength ($\lambda_{max\ PIS}$) of a maximum in absorption at 400nm (shoulder). After stirring the mixture for 30 min the photoinitiator was completely dissolved, thereby obtaining CRC1.

In each curing experiment and comparative experiment, 10 g of CRC1 was poured into a glass jar, thereby creating a column of CRC of 28 mm in height. The glass jars, filled with 10 g of CRC1 then were clamped with their bottom part at 1 cm above the LED. Then the light of the LED was switched on for an uninterrupted, predetermined, period and immediately after said period of irradiation, the results of curing, especially the height of the column of fully cured material (cure depth), respectively of gellified material, was measured.

The results of curing with respective LEDs (A) and (B) are shown in Table 1, where - for convenience - all results (in mm of cure depth) are presented for various irradiation times (in seconds) as indicated:

| Irradiation time (sec) | Comparative Examples | | Examples | |
|---|---|---|---|---|
| | (A) 395 nm LED | | (B) 450 nm LED | |
| | Comp. Ex. No. | Cure depth (mm) | Ex. No. | Cure depth (mm) |
| 5 | | | 1 | 2 |
| 10 | | | 2 | 4 |
| 15 | | | 3 | 7 |
| 30 | A | 3 | 4 | 15 |
| 60 | B | 5 | 5 | 28 |
| 120 | C | 7 | | |
| 240 | D | 10 | 6 | 28 |
| 480 | E | 21 | | |

After 60 seconds of irradiation, in Example 5, the whole CRC1 content of the glass jar was gellified into a rubbery material, the bottom part (of about 7 mm) already being fully cured and solidified. Curing, however, still was incomplete in the upper parts. Curing of the full content of the glass jar was complete already well within 240 seconds, as can be seen from the results of Example 6. The cured material from Example 6 was tested for determining the so-called Barcol hardness, both at the lower part of the CRC1 column and at its upper part. The Barcol hardness was found to be in the range of 55-60, without any significant difference between the values at the upper and lower part.

In the Comparative Examples only the bottom part of the resin layer was cured into a hard mass, whereas the top layer remained liquid, or gellified slowly. For instance, in Comparative Example D, the bottom 10 mm was gellified, with the lowest 5 mm part being hard and solid. In Comparative Example E, the bottom 21 mm were gellified, with the lowest 10 mm part being hard and solid, and the upper layer of 7 mm still being liquid.

These Examples and Comparative Examples clearly demonstrate that curing is performed more efficiently in case the LED emission spectrum does not match with the highest wavelength maximum in the absorption spectrum for the PIS.

**Claims**

1. Method for Light Emitting Diode (LED) curing of a curable resin composition containing a photoinitiating system, **characterized in that** the highest wavelength ($\lambda_{max\ PIS}$) of a maximum in absorption of the photoinitiating system is at least 20 nm below, and at most 100 nm below, the wavelength of the maximum in emission of the LED ($\lambda_{LED}$).

2. Method for LED curing according to claim 1, **characterized in that** $\lambda_{LED}$ is at least 420 nm.
   Method for LED curing according to any of claims 1 or 2, **characterized in that** $\lambda_{LED}$ is at least 440 nm.

3. Method for LED curing according to any of claims 1 to 3, **characterized in that** the wavelength difference between $\lambda_{LED}$ and $\lambda_{max\ PIS}$ (in nm) is at least 30 nm and at most 90 nm.

4. Method for LED curing according to claim 4, **characterized in that** the wavelength difference between $\lambda_{LED}$ and $\lambda_{max\ PIS}$ (in nm) is at least 40 nm and at most 80 nm.

5. Method for LED curing according to claim 5, **characterized in that** the wavelength difference between $\lambda_{LED}$ and $\lambda_{max\ PIS}$ (in nm) is at least 50 nm and at most 70 nm.

6. Method for LED curing according to any of claims 1 to 5, **characterized in that** $\lambda_{max\ PIS}$ is falling in the range of between 350 and 420 nm.

7. Method for LED curing according to any of claims 1 to 6, **characterized in that** the photoinitiating system contains a Norrish Type I photoinitiating system.

8. Method for LED curing according to claim 7, **characterized in that** the photoinitiating system is a phosphorous-containing photoinitiating system.

9. Method for LED curing according to any of claims 1 to 9, **characterized in that** the photoinitiating system is present in the curable resin composition in an amount in the range of from 0.001 to 5 wt.%, preferably of from 0.05 to 3 wt.%, most preferably of from 0.1 to 1 wt.%.

10. Method for LED curing according to any of claims 1 to 10, **characterized in that** the resin component of the curable resin composition is selected from the group consisting of

    (a) cationically curable resin components, in particular resin components selected from the group consisting of resin components containing hydroxyl groups, epoxy groups or oxetane groups, or combinations thereof, and of vinylester resin components, and of vinylether resin components, or mixtures of any of the foregoing;
    (b) radically curable resin components, in particular resin components selected from the groups consisting of

       (i) homopolymerisable resin components containing one or more electron-poor reactive unsaturations; and
       (ii) co-polymerisable resin components containing one or more electron-poor reactive unsaturations; and
       (iii) resin components consisting at least of a component containing at least two reactive unsaturations per molecule and a component containing at least two XH-groups per molecule, with XH representing a labile X-H bond and X not being O or C.

11. Method for LED curing according to claim 11, **characterized in that** the resin component of the curable resin composition has an average molecular weight in the range of from 500 to 10000 D, preferably of from 1000 to 5000 D, and most preferably of from 2500 to 4000 D.

12. Method for LED curing according to claim 11 or 12, **characterized in that** the resin component of the curable resin composition is containing one or more electron-poor reactive unsaturations.

13. Method for LED curing according to any of claims 1 to 13, **characterized in that** the resin composition further comprises one or more fillers, the fillers preferably being selected from the groups consisting of transparent fillers and translucent fillers.

**14.** Method for LED curing according to any of claims 1 to 14, **characterized in that** the resin composition further comprises an agent having thixothropic properties.

**15.** Method for LED curing according to any of claims 1 to 15, **characterized in that** the resin composition further comprises at least one reinforcement material.

**16.** Method for LED curing according to any of claims 1 to 16, **characterized in that** the resin composition further comprises at least one inhibitor, preferably at least one phenolic inhibitor.

**17.** Method for LED curing according to any of claims 1 to 17, **characterized in that** the curable resin composition, when being cured, has a thickness in the range of from 0.5 mm to 20 cm, preferably of from 1 mm to 5 cm.

**18.** Method for LED curing according to claim 18, **characterized in that**
the distance between the LED and the top-layer of the resin composition being cured is in the range of from 2 mm to 30 cm, preferably of from 2 mm to 10 cm.

**19.** Method for LED curing according to claims 18 or 19, **characterized in that**
the curable resin composition, when being cured, is covered at least at its layer facing the LED by a barrier layer sheet impermeable to the resin composition itself, and preferably consisting of a translucent material which is waterproof and permeable for volatile materials.

**20.** Method for LED curing according to any of claims 18 to 20, **characterized in that**
the LED curing of the resin composition is done while modulating the intensity of LED irradiation and/or of the wavelength of the maximum in emission of the LED ($\lambda_{LED}$) during the curing, preferably in combination with temperature control of the resin being cured, most preferably such temperature control being performed by non-contact temperature measurement.

**21.** Method for LED curing according to any of claims 18 to 21, **characterized in that**
the LED curing of the resin composition is used in an application for lining or re-lining of objects.

**22.** Objects containing a cured resin composition obtained by LED curing according to the method of any of claims 1 to 22.

**European Patent Office**

## PARTIAL EUROPEAN SEARCH REPORT

**Application Number**

which under Rule 45 of the European Patent Convention shall be considered, for the purposes of subsequent proceedings, as the European search report

EP 04 07 6230

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2003/081430 A1 (BECKER WILLIAM) 1 May 2003 (2003-05-01) * claims 1,32 * | 1-3 | C08J3/28 A61C19/00 |
| P,X | "Produktkatalog - SmartLite PS"[Online] XP002296081 Retrieved from the Internet: URL:http://www.dentsply.de/docs/index_asp_id~29725_domid~1042_sp~D_addlastid~0_m1~20366_m2~20415_m3~20386_m4~29725_suma~.htm> [retrieved on 2004-09-10] * page 3 * | 1-3 | |
| P,X | "Bluephase - Produktdossier"[Online] XP002296082 Retrieved from the Internet: URL:http://media.ivoclarvivadent.com/pdf/binarydata_de/info/bluephase_dossier_d.pdf> [retrieved on 2004-09-10] * pages 8,18 * | 1-3 | |

-/--

**TECHNICAL FIELDS SEARCHED (Int.Cl.7)**

A61C
C08J

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| The Hague | 13 September 2004 | Hillebrand, G |

EPO FORM 1503 03.82 (P04C07)

**European Patent Office**

**PARTIAL EUROPEAN SEARCH REPORT**

Application Number

EP 04 07 6230

| | DOCUMENTS CONSIDERED TO BE RELEVANT | | CLASSIFICATION OF THE APPLICATION (Int.Cl.7) |
|---|---|---|---|
| Category | Citation of document with indication, where appropriate, of relevant passages | Relevant to claim | |
| P,X | "New improved 3M ESPE Elipar FreeLight 2"[Online] XP002296083 Retrieved from the Internet: URL:http://multimedia.mmm.com/mws/mediaweb server.dyn?9999993gslo9u1A9N1A999wqsL____ Z-> [retrieved on 2004-09-10] * pages 1,2 * * tables * | 1-3 | |
| | ----- | | |
| P,X | "3M ESPE Elipar FreeLight 2 LED-Polymerisationsgerät - Technisches Produktprofil"[Online] XP002296084 Retrieved from the Internet: URL:http://www.zahnheilkunde.de/beitragpdf /pdf_1848.pdf> [retrieved on 2004-09-10] * pages 8,11,15 * * figure 4 * | 1-3 | TECHNICAL FIELDS SEARCHED (Int.Cl.7) |
| | ----- | | |

EPO FORM 1503 03.82 (P04C10)

**European Patent
Office**

**INCOMPLETE SEARCH
SHEET C**

Application Number

EP 04 07 6230

Claim(s) searched incompletely:
   1-22

Reason for the limitation of the search:

Present claims 1-22 relate to a method and object arrived from that method defined by reference to a desirable characteristic or property, namely the highetst wavelength of a maximum of absorption of the photoinitiating system being at least 20 nm below, and at most 100 nm below, the wavelength of the maximum in emission of the LED.

The use of these parameters in the present context is considered to lead to a lack of clarity within the meaning of Article 84 EPC. It is impossible to compare the parameters the applicant has chosen to employ with what is set out in the prior art. The lack of clarity is such as to render a meaningful complete search impossible. Consequently, the search has been restricted to:

The examples, in which a curable composition, which is a commercially available one, is irradiated by a LED at more than 415 nm.

As stated on page 3, line 3-35 the problem of the present application is to find safe and reliable methods for providing cured structural parts. According to page 3, line 18-21 LED with wavelegth of more than 415 nm cannot be used for curing curable resins.

**ANNEX TO THE EUROPEAN SEARCH REPORT
ON EUROPEAN PATENT APPLICATION NO.**

EP 04 07 6230

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2004

| Patent document cited in search report | Publication date | Patent family member(s) | Publication date |
|---|---|---|---|
| US 2003081430 A1 | 01-05-2003 | NONE | |

EPO FORM P0459

For more details about this annex : see Official Journal of the European Patent Office, No. 12/82